# EUROPEAN PATENT APPLICATION

(11) **EP 3 524 387 A1**
(43) Date of publication of application: **14.08.2019**
(21) Application number: 19155691.9
(22) Date of filing: 06.02.2019
(51) Int. Cl.: B23Q 7/04, B23Q 11/08

(54) **APPARATUS FOR PROCESSING STRUCTURAL STEEL PRODUCTS COMPRISING AN ACOUSTICALLY INSULATING COVER**

(30) Priority: 09.02.2018 IT 201800002555
(71) Applicant: Manni Sipre S.p.A., 37135 Verona (IT)
(72) Inventor: MASSIMO, FABBRI, 37057 San Giovanni Lupatoto (VR) (IT)
(74) Representative: Autuori, Angelo

(57) **Abstract**

An apparatus for processing structural steel products **(B),** comprising at least one working station for carrying out at least one mechanical processing on the structural steel product **(B),** means **(3)** for loading and means **(3')** for unloading the structural steel product **(B)** in/from the working station **(10).** The latter comprising at least one first working head **(30)** and a worktop **(14)** susceptible to support the structural steel product (**B**) during processing reciprocally movable. The working station further comprises a supporting structure **(16)** comprising a frame **(16')** and at least one first acoustically insulating cover **(20)** placed on said frame **(16')** to surround the working head **(30).** The acoustically insulating cover **(20)** having a generally closed shape with a single opening **(21)** placed in correspondence of the worktop **(14)** and made of a flexible laminar polymeric material comprising a plurality of pads made of an acoustically insulating material.

## Description

### Field of the Invention

The present invention generally relates to the technical field of plant engineering, and it particularly has as object an apparatus for processing long structural steel products comprising an acoustically insulating cover.

### Background of the invention

It is known that industrial equipment produce loud noise during operation. Therefore, the personnel working nearby, generally wear devices, susceptible to eliminate or reduce the noise originated from the same.

Such devices are uncomfortable and heavy to wear, in fact the personnel often tend not to use them.

In order to minimize the noise emitted by a piece of industrial equipment, therefore, rigid panels insulation are nowadays available on the market. By combining such rigid panels it is possible to produce acoustically insulating covers of any size.

The drawbacks of such solution are the high bulkiness and the cost, that restrict its versatility. For example, if the machinery is placed in an niche or has high-bulkiness, the use of covers or rigid panels is disadvantageous.

Another problem is that in case of machine downtime for maintenance or replacements of damaged parts, the disassembling of the cover may result extremely difficult. Therefore, such covers have access doors and internal corridors susceptible to the operators passage, which increase its bulkiness.

Such solution is furthermore, unfeasible in case of high bulkiness plants with movable working heads, as in the case of apparatus for processing structural steel products.

### Summary of the invention

Object of the present invention is to overcome, at least partially, the drawbacks illustrated above, by providing an apparatus for processing structural steel products being extremely efficient and relatively cost-effective.

Another object of the present invention is to provide an apparatus for processing structural steel products with reduced noise emissions.

Another object of the present invention is to provide an apparatus for processing structural steel products with low management costs.

Such objects, as well as others that will be clearer hereinafter, are fulfilled by an apparatus for processing structural steel products according to what is herein described, shown and/or claimed.

Advantageous embodiments of the invention are defined in according to the dependent claims.

### Brief description of the drawings

Further features and advantages of the present invention will become more evident by reading the detailed description of some preferred but not exclusive embodiment of the invention, illustrated as a non-limiting example, with the help of the annexed drawings wherein:

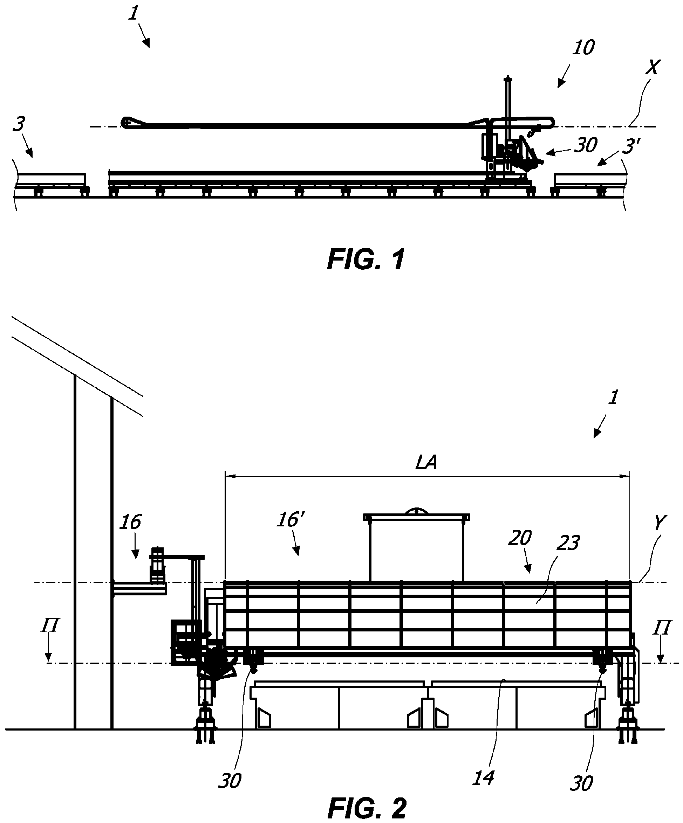

**FIG. 1** is a side view of the apparatus **1**;

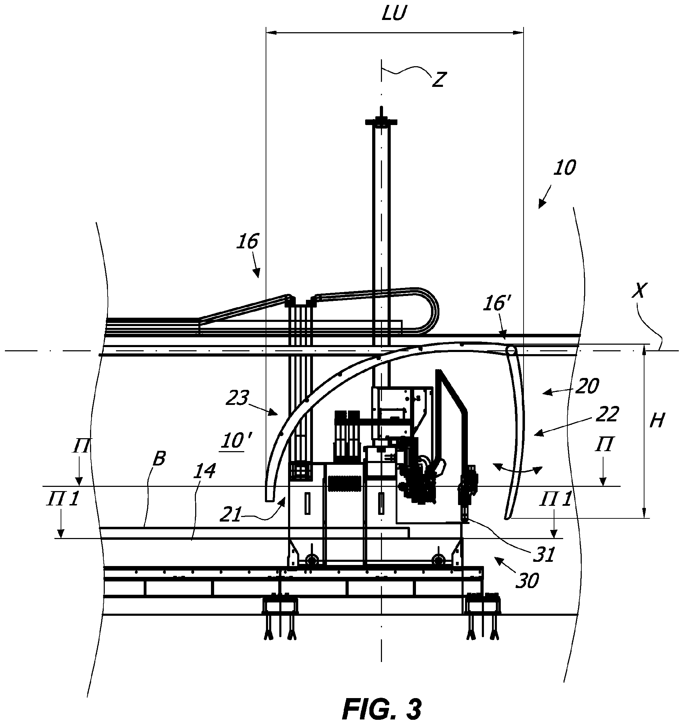

**FIGs. 2**and **3** are schematic views respectively front and side views of some details of the apparatus **1.**

### Detailed description of a preferred embodiment.

With reference to the above mentioned figures, the apparatus **1** for processing structural steel products **B** preferably long structural steel products of high bulkiness, which may be produced on-site or elsewhere, typically in steel mills.

In particular, "long structural steel products" means structural steel products as defined in the UNI EN 10025 standard as, for example, H-beams, I-beams, laminates, steel profiles, tubular stainless steel products or similar.

Suitably, the long products **B** are then cut and/or shaped in order to produce different typologies of finished or semi-finished steel products. For example it may be possible to produce structural products which may be used to realize load bearing structures in the field of civil construction and industrial construction, mechanical engineering, heavy carpentry, plant engineering, shelving, automatic warehouses or similar.

According to a preferred but not exclusive embodiment of the invention, the apparatus **1** may be particularly suitable to perform cutting processing, preferably hot cutting and even more preferably oxy-fuel cutting, that is to say the cutting operation of steel through an oxyacetylene flame and a jet of pure oxygen.

Suitably, the apparatus may therefore comprise at least one working station **10** in order to carry out such cutting processing.

It is understood that such characteristic is non-limiting, since the working station **10** and more in general the apparatus **1** may be configured in order to perform any kind of mechanical processing on the long product **B**, such as drilling, hot and cold cutting, tapping, notching, tracing, punching, or similar.

Possibly, the apparatus **1** may comprise a plurality of working stations **10,** each of which may process a different portion of the same long product **B** or of different long products **B.**

The processing may be all the same, otherwise the different working stations **10** may be configured so as to carry out different processes.

Anyway, each working station **10** may comprise a working area **10'** which may comprise a worktop **14** in order to support the long product **B** during processing. On the other hand, the apparatus **1** may comprise means **3** for loading the long product **B** in the working station **10** and means **3'** for unloading the long product **B** processed by the same working station **10.**

For example the apparatus **1** may comprise a loading bench **3,** an unloading bench **3'** and handling means, such as an arm, in order to promote the placement of the long product **B** on the working area **10'.** Possibly, the arm may therefore promote the loading and/or the unloading of the long product **B** in and/or from the working station **10** defining both loading 3 and unloading means **3'.**
it is understood, however, that any other system known to a person skilled in the art may be used for this purpose.

The working station **10** may comprise at least one working head **30** which may include, for example, one or more torches **31** in order to carry out the oxy-fuel cutting. It is understood that the working head **30** may comprise different typologies of tools so as to carry out different processing without departing from the scope of the invention.

Suitably, one between the working head **30** and the worktop **14** may be movable in respect to the other. Preferably, the worktop **14** may be fixed, while the working head **30** may move so as to perform the different processing and it may process more areas of the same long product **B.**

Possibly, well known means for blocking the product **B** in an operative position during the processing may be provided, such as a vise and means promoting the sliding of the long product **B,** such as a plurality of rollers.

Preferably, the worktop **14** may have a substantially longitudinal development defining an axis **X.** Suitably, the product **B** may furthermore be moved inside the apparatus along a forwarding direction substantially coincident with the axis **X.**

It is understood that the worktop **14** may be different depending on the typologies of the products **B** to process, for example, if the latter are beams or sheet metals.

Suitably, the working station **10** may comprise a supporting structure **16** having a development which is substantially parallel to the axis **X** and it may further comprise a frame **16'** which may have a development along the axis **Y** substantially perpendicular to the axis **X.**

On the other hand, the working head **30** may be substantially slidable in order to move on a plane **π** substantially parallel to the plane **π1** defined by the worktop **14** and/or it may move tranversally with respect to the same plane **π1**.

More particularly, the working head **30** may be movable along the axis **X** and/or along the axis **Y** substantially transversal to the axis **X** so as to move along the plane **π,** and/or it may be movable along an axis **Z** substantially perpendicular to the worktop **π1**.

Suitably, the frame **16'** may be slidable along the axis **X,** for example it may slide along the supporting structure **16,** so the working head **30** may slide along the same axis **X** integrally with the frame **16'.**

In other words, the working head **30** may substantially be fixed, while the worktop **14** may move in order to promote the sliding of the product **B** with respect to the same working head **30.** On the other hand, the product **B** may substantially be still in an operative position, while the working head **30** may move in order to carry out the processing in different positions of the product **B.**

It is understood that the movement of the worktop **14,** of the product **B** and/or of the working heads **30** may be realized in a per se known type.

According to a particular aspect of the invention, an acoustically insulating cover **20** to surround the working head **30** may be provided.

The acoustically insulating cover may comprise or be produced in soundproofing and/or sound absorbing material. The acoustically insulating cover may therefore be an acoustically insulating cover **20** used to insulate the working head **30** during its use, so as to reduce the noise in the work environment.

Moreover, thanks to the acoustically insulating cover **20** it may be possible to respect the noise pollution regulations and/or it may be possible to make the work environment more comfortable.

Suitably, the acoustically insulating cover **20** may comprise or it may be produced in a flexible laminar polymeric material comprising a plurality of pads in soundproofing and/or sound absorbing material. For example, the acoustically insulating cover **20** may be a sound absorbing curtain.

More precisely, the acoustically insulating cover **20** may be made of modular elements including polymeric material layers, such as polyvinyl chloride (PVC), and layers of of cotton or glass fibers, interposed among the polymeric material layers. Possibly, the layers of fibers may be alternated with viscoelastic material in order to create the pads.

Suitably, the acoustically insulating cover **20** may have a generally closed shape, with only one opening **21** placed in correspondence of the worktop **14,** which may come into contact or spaced apart the same worktop. Preferably, such opening **21** may have a substantially rectangular shape.

The acoustically insulating cover **20** may present two side portions **22, 23** substantially facing one another, while the working head **30** may remain interposed between them.

Suitably, the acoustically insulating cover **20** may present at least one openable side portion **22,** so as to allow a user to access the working head **30** and/or to the worktop **10'.** Possibly, the whole side portion**22** may be openable.

Moreover, the acoustically insulating cover **20** may be easily removable.

Thanks to such characteristics, the maintenance and/or intervention operations on the apparatus **1** and/or on the acoustically insulating cover **20** may be simple and cheap.

The acoustically insulating cover **20** may be configured so as to surround the working head **30** in all the working positions of the latter. In particular, the same acoustically insulating cover **20** may be configured so as to surround the working head **30** and to remain spaced from the latter during its use, so as to not come into reciprocal contact.

On this purpose, as better explained below, the acoustically insulating cover **20** may therefore have such bulkiness to allow the free movement of the working head **30** during the processing and/or it may integrally move with the same working head **30.**

Suitably, the acoustically insulating cover **20** and the working head **30** may be reciprocally spaced so as to allow the processing of the product **B** without running the risk of damaging the acoustically insulating cover **20** itself.

Indeed, it is understood that the bulkiness of the acoustically insulating cover **20** may vary depending on the processing typology and/or on the working head typology **30.** For example, depending on the temperature reached during the processing or depending on the bulkiness of the working head **30.**

For example, the acoustically insulating cover **20** may move in a substantially integral way with the working head **30** so as to remain spaced apart the latter.

Preferably, the acoustically insulating cover **20** may be coupled with the frame **16'** in order to move along axis **X,** integrally with the same, and therefore with the working head **30,** while it may have such a width **LA** along the axis **Y** sufficient to allow the movement of the working head **30** inside the acoustically insulating cover **20.**

Possibly, the frame **16'** may be movable along the axis **Z,** so the acoustically insulating cover **20** may integrally move with the first along the axis **Z** as well.

Suitably, the acoustically insulating cover **20** may have such a height **H** along the axis **Z** sufficient to allow the movement of the working head **30** along the same axis **Z** without coming into reciprocal contact.

According to a particular embodiment which has not been illustrated in the attached figures, the acoustically insulating cover **20** may have such a length **LU** along the axis **X,** such a width **LA** along the axis **Y,** and such a height **H** along the axis **Z** sufficient to allow the movement of the working head **30** without the movement of the acoustically insulating cover **20** itself.

Thanks to these characteristics, the acoustically insulating cover **20** may acoustically insulate the working head **30** so as to improve the quality of the working environment. Moreover, the operators involved in such working environment may operate on the apparatus **1** without the need for personal noise suppression devices such as earmuffs or ear plugs.

Advantageously, moreover, it may be possible to take action on the apparatus **1** in a simple and quick manner because of the minimal bulkiness of the acoustically insulating cover **20** . Possibly, moreover, by opening the portion **22** it may be possible to take action on the working head **30** in an easy way, without removing the acoustically insulating cover **20.**

According to an aspect of the invention, a plurality of working heads **30** and a single acoustically insulating cover **20** surrounding both may be provided. For example, the working heads **30** may be coupled with a frame **16',** while the only acoustically insulating cover**20** may have such a width **LA** sufficient to cover both the working heads **30.**

On the other hands, as schematically shown in the attached figures, a plurality of working heads **30** and an equivalent plurality of acoustically insulating covers **20** may be provided to surround them, both coupled with a respective frame **16'.**

Thanks to the above mentioned characteristics, the acoustically insulating cover **20** may surround the only working head **30** so that the space taken up buy the same is minimum.

From what described above, it is clear that the invention reaches the intended purposes.

The invention is susceptible to numerous modifications, all falling within the inventive concept of the attached claims. All the details can be replaced by other technically equivalent elements, and the materials can be different depending on requirements, without losing the scope of protection defined in the appended claims.

## Claims

1. Apparatus for processing structural steel products (**B**), comprising:
- at least one working station (**10**) for carrying out at least one mechanical processing on the structural steel product (**B**);
- means (**3**) for loading the structural steel product (**B**)into said at least one working station (**10**);
- means (**3**) for unloading the structural steel product (**B**)into said at least one working station (**10**);
wherein said at least one working station (**10**) comprises:
- at least one first working head (**30**);
- a worktop (**14**) susceptible to support the structural steel product (**B**) during the processing;
wherein at least one of said at least one first working head (**30**) and said worktop (**14**) is movable with respect to the other;
- a supporting structure (**16**) comprising a frame (**16'**); and
- at least one first acoustically insulating cover (**20**) placed on said frame (**16'**) to surround said at least one first working head (**30**), said at least one first acoustically insulating cover (**20**) having a generally closed shape with a single opening (**21**) placed in correspondence of said worktop (**14**);
wherein said at least one first acoustically insulating cover (**20**) is made of a flexible laminar polymeric material comprising a plurality of pads made of an acoustically insulating material.

2. Apparatus according to claim 1, wherein said at least one first working head (**30**) is movable, said at least one first acoustically insulating cover (**20**) being configured to 25 surround said at least one first working head (**30**) during processing.

3. Apparatus according to claim 1 or 2, wherein said at least one first working head (**30**) and said at least one first acoustically insulating cover (**20**) are reciprocally configured so that during the processing remain reciprocally spaced apart each other so as to not be reciprocally in contact.

4. Apparatus according to any one of the preceding claims, wherein said at least one first acoustically insulating cover (**20**) is integrally movable with said at least one first working head (**30**).

5. Apparatus according to any one of the preceding claims, wherein said frame (**16'**) has a substantially longitudinal development defining a first axis (**Y**), said at least one first working head (**30**) being movable along said first axis (**Y**), said at least one first acoustically insulating cover (**20**) having a width (**LA**) along said first axis (**Y**) such as to allow the movement of said at least one working head (**30**) along said first axis (**Y**) without move said at least one first acoustically insulating cover (**20**).

6. Apparatus according to any of the preceding claims, wherein said opening (**21**) has a substantially rectangular shape.

7. Apparatus according to any of the preceding claims, wherein said at least one first acoustically insulating cover (**20**) has at least one openable side portion (**22**) so as to allow an operator to access said at least one first working head (**30**).

8. Apparatus according to any of the preceding claims, wherein said at least one working station (**10**) comprises a second working head (**30**), said at least one first acoustically insulating cover (**20**) surrounding said at least one first and second working heads(**30**).

9. Apparatus according to any one of claims 1 to 7, wherein said at least one working station (**10**) comprises a second working head (**30**) and at least one second acoustically insulating cover (**20**) for surrounding said second working head (**30**).

10. Apparatus according to any of the preceding claims, wherein said at least one first acoustically insulating cover (**20**) or said at least one first and second acoustically insulating covers (**20**) comprise modular elements each including at least two outer layers of polymeric material and at least one layer interposed between the latter made of cotton and/or glass fibers.
